(19) **Europäisches Patentamt / European Patent Office / Office européen des brevets**

(11) **EP 1 209 626 B1**

(12) **EUROPEAN PATENT SPECIFICATION**

(45) Date of publication and mention
of the grant of the patent:
**28.02.2007 Bulletin 2007/09**

(51) Int Cl.:
***G06T 9/00*** (2006.01)

(21) Application number: **01309832.2**

(22) Date of filing: **22.11.2001**

(54) **Method and apparatus for data compression**

Verfahren und Vorrichtung zur Datenkompression

Procédé et appareil destinés à la compression de données

(84) Designated Contracting States:
**BE DE ES FR GB NL**

(30) Priority: **23.11.2000 KR 2000070090**
**07.07.2001 KR 2001040704**

(43) Date of publication of application:
**29.05.2002 Bulletin 2002/22**

(73) Proprietor: **SAMSUNG ELECTRONICS CO. LTD.**
**Kyungki-do,**
**Seoul (KR)**

(72) Inventors:
• **Jang, E-S,**
**542-904 Shinnamushil Ssangyong Apt**
**Suwon-city,**
**Kyungki-do (KR)**
• **Kim, Do-Kyoon**
**Seongnam-city,**
**Kyungki-do (KR)**
• **Woo, Sang-Oak**
**Seoul (KR)**

(74) Representative: **Greene, Simon Kenneth**
**Elkington and Fife LLP,**
**Prospect House,**
**8 Pembroke Road**
**Sevenoaks,**
**Kent TN13 1XR (GB)**

(56) References cited:
**EP-A- 0 789 327**       **EP-A- 0 851 684**
**WO-A-87/04032**       **GB-A- 2 296 839**

• **BOURGES-SEVENIER M ET AL: "Animation framework for MPEG-4 systems" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 1115-1118, XP010513205 ISBN: 0-7803-6536-4**

EP 1 209 626 B1

## Description

The present invention relates to animation of 3-Dimensional (3D) graphics models, and more particularly, to apparatuses for compression and reconstruction of an animation path, which is used in animation, using linear approximation, methods of compression and reconstruction used in the apparatuses, and data formats for the apparatuses and methods.

In 3D computer animation, interpolators are used to express motion and rotation in a space, model morphing, color changes, etc. of a 3D model object.

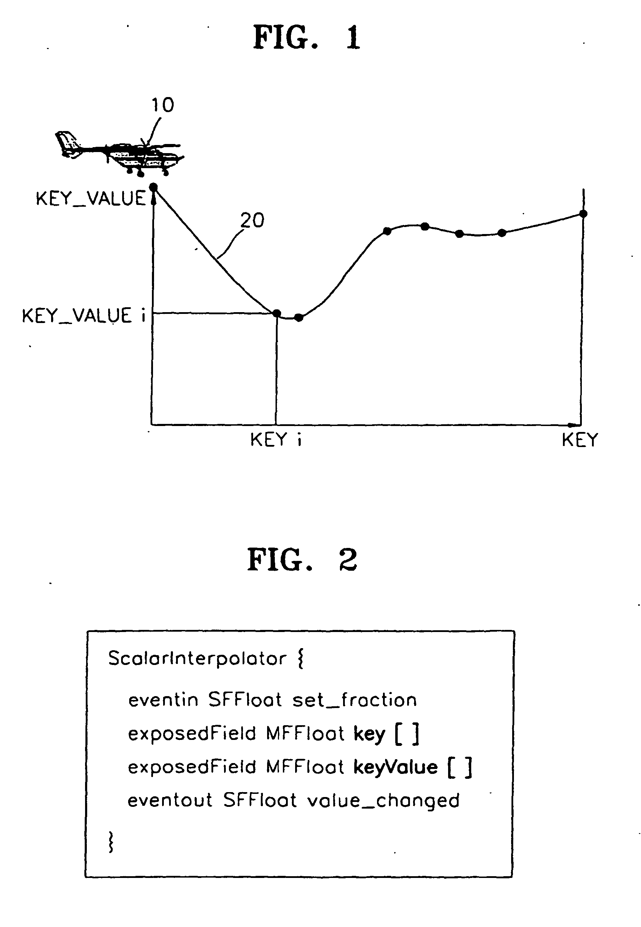

FIG. 1 is a diagram for explaining an animation path in ordinary 3D animation, and the vertical axis represents key values (KEY_VALUE) and the horizontal axis represents keys (KEY).

As shown in FIG. 1, the animation path 20 expresses the animation trace of a 3D model 10. The path 20 of animation information is a 2-dimensional curve varying with respect to time, as shown in FIG. 1. The animation path may be represented by a variety of methods, which are explained in Chapter 9 of A. K. Jain, "Fundamentals of Digital Image Processing", published by Prentice Hall in 1989.

In an expression using an interpolator, the animation path 20 having a curve shape, as shown in FIG. 1, can be represented by definite straight lines using a plurality of segments. Essential information in this expression includes break points or vertices of each definite straight line segment. Here, the break points or vertices are expressed as points on the animation path 20 of FIG. 1. Using linear interpolation, the original curve can be reconstructed from the break points.

FIG. 2 is an example of an expression (Scalar Interpolator) of an animation path used in the Virtual Reality Modeling Language (VRML) or MPEG-4. Information to be processed includes keys and key values, and linear interpolation is performed using given information.

Interpolators can be roughly divided into 6 kinds: scalar interpolators, position interpolators, coordinate interpolators, orientation interpolators, normal interpolators, and color interpolators. Among them, scalar interpolators can be expressed as shown in FIG. 2. The characteristics and functions of the 6 kinds of interpolators are shown in the following table 1, and all the interpolators are sets of given keys and key values corresponding to the keys.

**Table 1**

| Kinds | Characteristics | Functions |
|---|---|---|
| Scalar Interpolator | Linear interpolation of scalar change amount | Expression of width, radius, solidity, etc. |
| Position Interpolator | Liner interpolation on 3D coordinates | Parallel movement in a 3D space |
| Orientation Interpolator | Spherical Linear interpolation of 3D axes and rotation amount | Rotation in a 3D space |
| Coordinate Interpolator | Liner interpolation of 3D model coordinate change amount | 3D morphing |
| Normal Interpolator | Spherical Linear interpolation of 3D normal coordinates | Expression of 3D normal vector change |
| Color Interpolator | Linear interpolation of color tone information | Expression of color tone change amount |

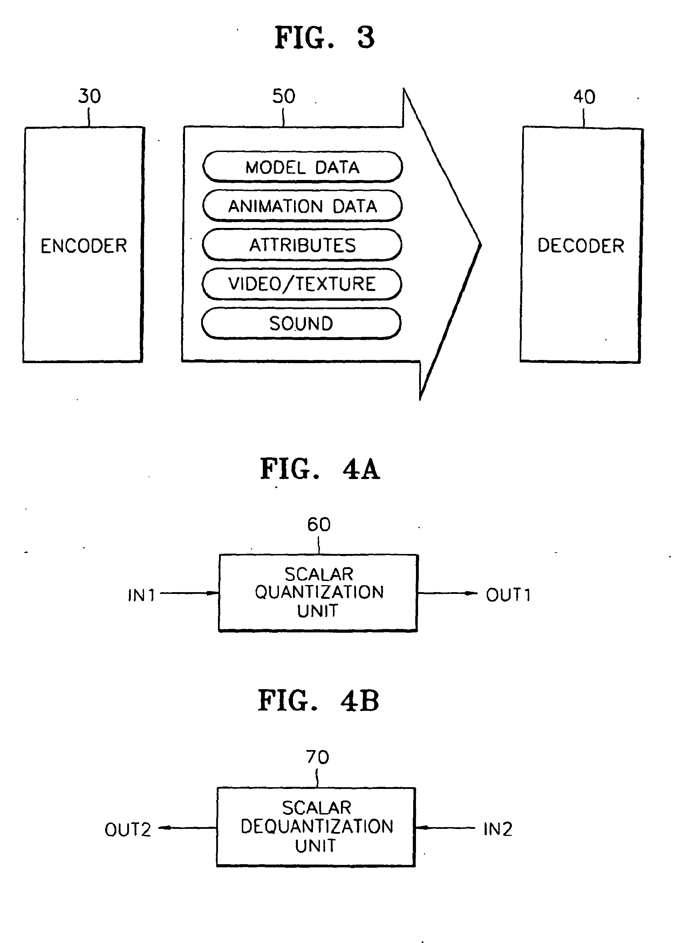

FIG. 3 is a schematic diagram for explaining a 3D animation data format, and shows an encoder 30, a decoder 40, and a 3D animation file format 50. Here, the 3D animation file format 50 output from the encoder 30 to the decoder 40 is formed with model data, animation data, attributes, video/texture, and sound.

Referring to FIG. 3, an interpolator corresponds to animation data which efficiently expresses a 3D animation path. 3D animation data expressed by the VRML or MPEG-4 is formed with information shown in FIG. 3. While standardized compression technologies are provided for audio, video, and 3D models, only expression-oriented general-purpose compression technologies are provided for interpolator for determining an animation path. In animation excluding audio/video, the amount of data for animation paths together with 3D models take most of the needed amount of data. Therefore, together with technology for compression of 3D models, technology for compression of animation paths is essential. Though the MPEG-4 Binary Format for Scene (BIFS) provides a basic quantization/compression method for animation, the method is not a technology dedicated for interpolators but a general-purpose compression technology and has poor compression performance. This is disclosed in Euee S. Jang "3D Animation Coding: its History and Framework", proceedings of the International Conference on multimedia and Expo held in New York city in 2000.

FIGS. 4a and 4b are block diagrams of prior art animation path compression and reconstruction apparatuses, respectively. The prior art compression apparatus of FIG. 4a is formed with a scalar quantization unit 60, and the prior art reconstruction apparatus of FIG. 4b is formed with a scalar dequantization unit 70. An original animation path is input in the form of (key, key_value) through an input terminal IN1 to the scalar quantization unit 60 of FIG. 4a and is scalar quantized. An encoded bit stream which is the result of scalar quantization is output through an output terminal OUT1. The scalar dequantization unit 70 of FIG. 4b receives the encoded bit stream through an input terminal IN2 and outputs data in the form of a reconstructed animation path (key, key_value) through an output terminal OUT2.

The interpolator compression in the prior art MPEG-4 BIFS needs scalar quantization as shown in FIG. 4a. The prior art compression process of FIG. 4a is applied not only to interpolators but to all elements that need compression in the BIFS. In the inverse of the compression order, an animation path is reconstructed through the scalar dequantization unit 70, using the encoded bit stream input to the prior art reconstruction apparatus of FIG. 4b. In the apparatuses of FIGS. 4a and 4b, keys and key values of interpolators are compressed in a uniform way, without considering the characteristics of each kind, so compression cannot be maximized.

Bourges-Sevenier et al, in "Animation Framework for MPEG-4 systems", Multimedia and Expo 2000, ICME 2000, p1115 to 1118, describes an animation framework with an original curve interpolated using keys and key valuess.

EP851684 describes automatically encoding the contour of an object, by adding vertices until the line between vertices approximates the contour of the object.

WO 87/04032 describes a method of transmitting a video signal in samples form using an entropy encoder.

According to a first aspect of the invention there is provided an apparatus for compressing an animation path as set out in claim 3, having an interpolator analysis unit for extracting a predetermined number of break points from an animation path and outputting keys and key values corresponding to the break points; a key coder for coding keys output from the interpolator analysis unit; a key value coder for coding key values output from the interpolator analysis unit; and an entropy encoder for entropy encoding the keys and key values which are coded in the key coder and key value coder, respectively, and outputting encoded bit streams.

The present invention may thus provide an apparatus and method for compressing an animation path using linear approximation, in which animation data in the form of an interpolator is efficiently compressed so that transmitting and storing data is quickly performed.

Also, there is provided a method for compressing an animation path as set out in claim 1.

There is also provided an apparatus for reconstructing the animation path according to claim 9 and a corresponding method according to claim 11.

It is preferable that the path difference is expressed by the sum of areas of trapezoids or twisted trapezoids which are formed by the original animation path and the approximated animation path.

It is preferable that in an orientation interpolator, the path difference is defined as a differential rotation angle in a differential rotation transformation, which is the difference between a rotation transformation of the original animation path and a rotation transformation of the approximated path.

Also, there is provided a method for reconstructing an animation path having the steps of receiving and entropy decoding an encoded bit stream; decoding keys and key values from the result of entropy decoding; and reconstructing an original animation path by obtaining empty key values by linear interpolation based on the decoded keys and key values.

A bit stream may be obtained by encoding an animation path, the bit stream having a key flag for indicating key values of which axes are selected among key values corresponding to an x, y, or z coordinate of each break point of the animation path; an array-type key for indicating that at least one or more key values are selected among key values corresponding to an x, y, or z coordinate of each break point; and array-type key values for indicating key values selected for each break point.

The present invention also provides a data format for compression of animation path data.

The above objects and advantages of the present invention will become more apparent by describing in detail preferred embodiments thereof with reference to the attached drawings in which:

FIG. 1 is a diagram for explaining an animation path in ordinary 3-Dimensional (3D) animation;
FIG. 2 is an example of an expression of an animation path used in the Virtual Reality Modeling Language (VRML) or MPEG-4;
FIG. 3 is a schematic diagram for explaining a data format of 3D animation;
FIGS. 4a and 4b are block diagrams of prior art animation path compression and reconstruction apparatuses, respectively;
FIGS. 5a and 5b are block diagrams of animation path compression and reconstruction apparatuses according to the present invention, respectively;
FIG. 6 is a block diagram of a preferred embodiment of the compression apparatus according to the present invention of FIG. 5a;
FIG. 7 is a block diagram of a preferred embodiment of the reconstruction apparatus according to the present invention of FIG. 5b;
FIGS. 8a through 8h are diagrams for explaining a preferred embodiment of extracting break points using linear approximation according to the present invention;

FIG. 9 is a diagram for explaining a method for obtaining the difference between a real animation path and an approximated animation path;

FIG. 10 is a diagram of a quantization process, and more particularly, of a Differential Pulse Code Modulation (DPCM) coding method which is generally used;

FIGS. 11a through 11e are diagrams for showing formats of coded bit streams according to the present invention;

FIG. 12 is a table for explaining a decoding process expressed in a syntax expression according to the present invention;

FIGS. 13a through 13d are graphs of experimental animation sequences for comparing the compression method of the present invention with the prior art compression method; and

FIGS. 14a through 14f are diagrams for explaining another preferred embodiment of extracting break points using spherical linear approximation according to the present invention.

In the following description of the present invention, the interpolator expressions used are those used in the VRML/MPEG-4, and the fields in which the interpolators are used include online computer games, animation advertisements, etc.

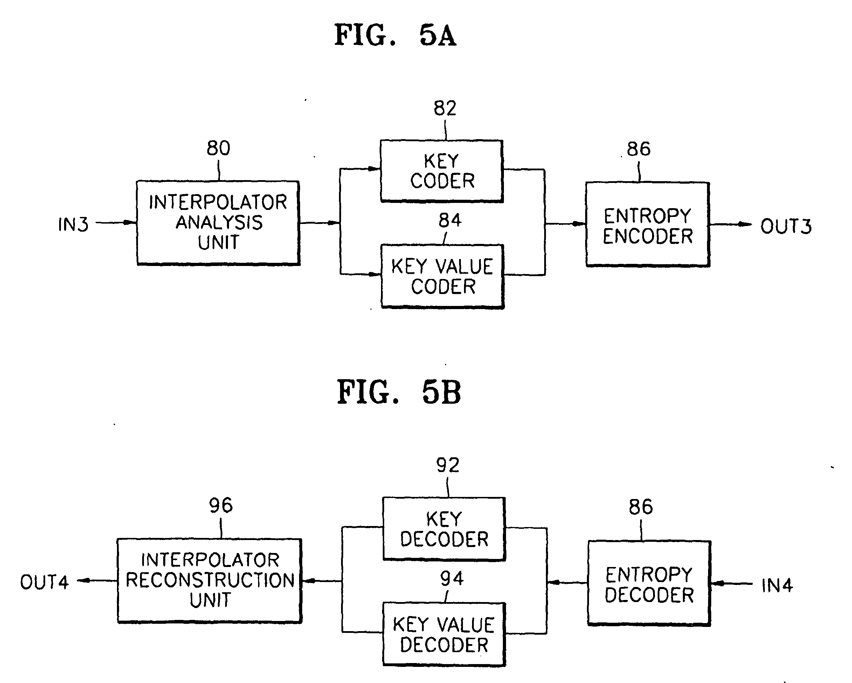

FIG. 5a is a block diagram of an apparatus for compressing an animation path according to the present invention, the apparatus including an interpolator analysis unit 80, a Key (K) coder 82, a Key Value (KV) coder 84, and an entropy encoder 86. FIG. 5b is a block diagram of an apparatus for reconstructing an animation path according to the present invention, the apparatus including of an entropy decoder 90, a key decoder 92, a key value decoder 94, and an interpolator reconstruction unit 96.

The interpolator analysis unit 80 of the compression apparatus of FIG. 5a selects keys and key values to be encoded, and may be designed in consideration of the characteristics of different types of interpolators. An example of detailed analysis will be explained later.

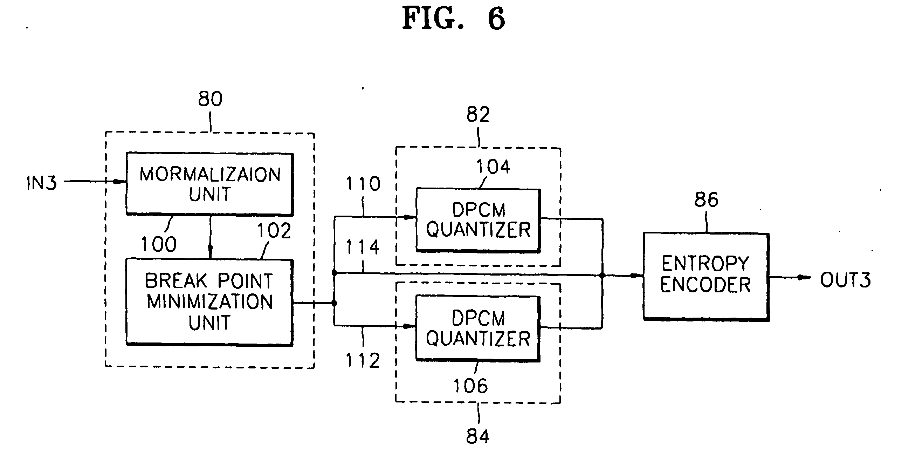

FIG. 6 is a block diagram of a preferred embodiment of the compression apparatus according to the present invention of FIG. 5a. The compression apparatus of FIG. 6 includes the interpolator analysis unit 80 having a normalization unit 100 and a break point minimization unit 102, the key coder 82 having a Differential Pulse Code Modulation (DPCM) quantizer 104, the key value coder 84 having a DPCM quantization unit 106, and the entropy encoder 86.

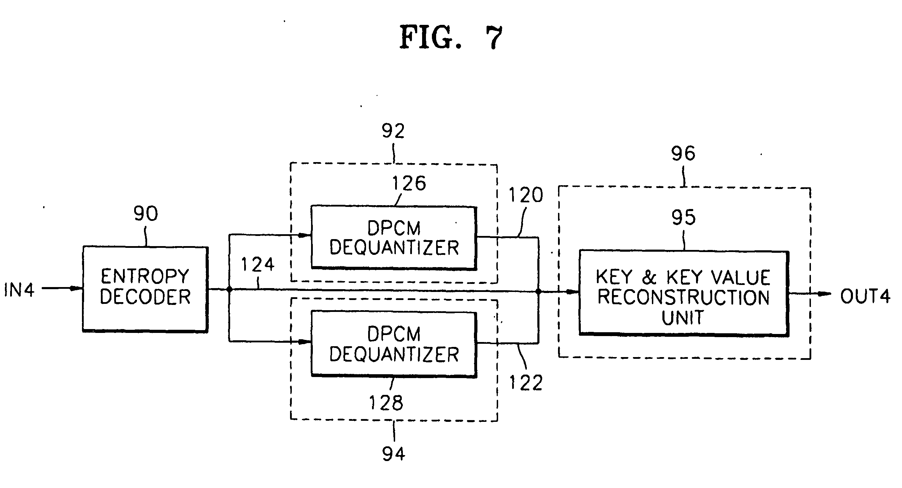

FIG. 7 is a block diagram of a preferred embodiment of the reconstruction apparatus according to the present invention of FIG. 5b. The reconstruction apparatus includes the entropy decoder 90, the key decoder 92 having a DPCM dequantizer 126, the key value decoder 94 having a DPCM dequantizer 128, and the interpolator reconstruction unit having a key & key value reconstruction unit 95.

Interpolator expression provided to the input of the interpolator analysis unit 80 includes keys (K) and key values (KV). In the compression apparatus of FIG. 6, the interpolator analysis unit 80 adjusts the number of break points so that an animation path, which is input through an input terminal IN3, can be expressed by a minimum number of break points. If the original number of break points of the animation path is N, the number of break points output from the interpolator analysis unit 80 is adjusted to M ($M \leq N$). That is, the interpolator analysis unit 80 extracts break points from the original animation path input to the input terminal IN3.

In an interpolator, a key and key values can be respectively normalized and used. For this, the normalization unit 100 normalizes each of the key and key values in the original animation path which is input through the input terminal IN3, and outputs normalized results to the break point minimization unit 102. A key supported by the VRML has a value between 0 and 1 inclusive.

The way the interpolator analysis unit 80 adjusts the number of break points may be determined so that the difference of the animation path generated by the adjusted break points and the original animation path is minimized. For this, the break point minimization unit 102 makes break points extracted from the normalized key and key values, which are output from the normalization unit 102, so that the number of the extracted break points is minimized. For example, for a position interpolator, the break point minimization unit 102 determines break points so that the area representing error between the real path and the quantized path, which is determined by the interpolator analysis unit 80, is minimized.

Meanwhile, extraction of break points using linear approximation performed in the break point minimization unit 102 of FIG. 6 will now be explained.

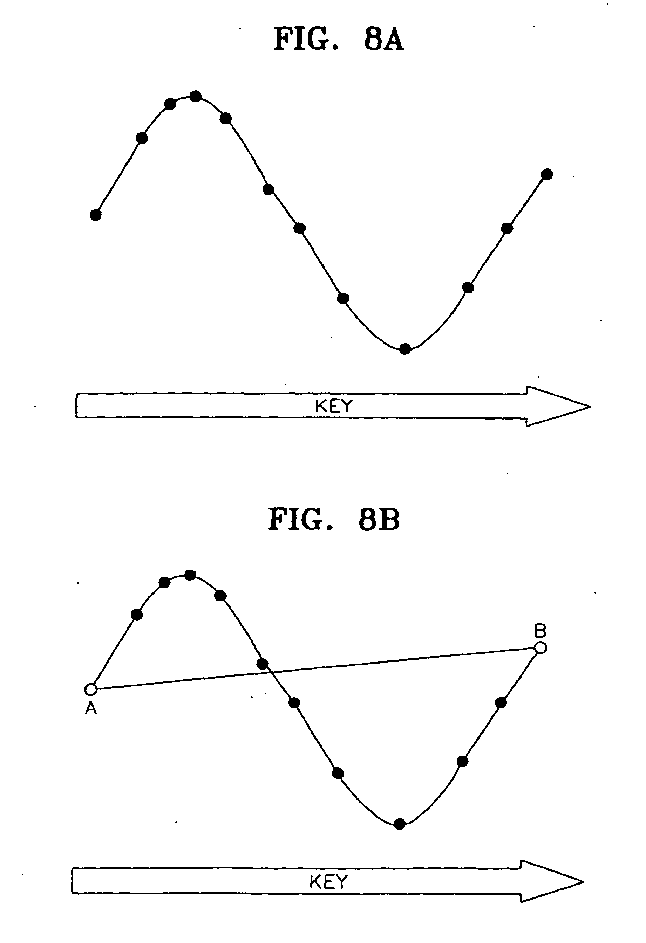

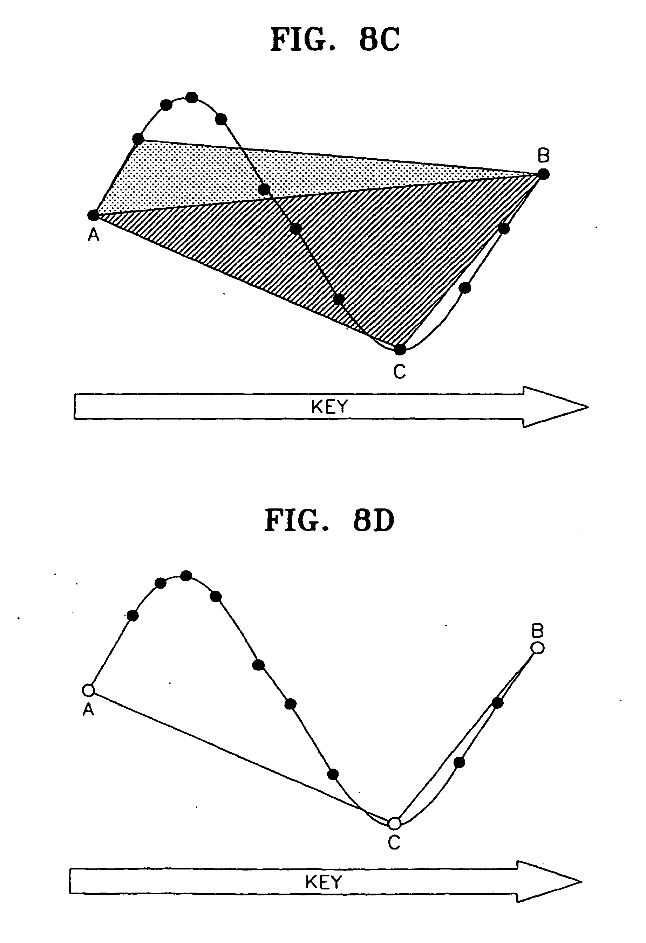

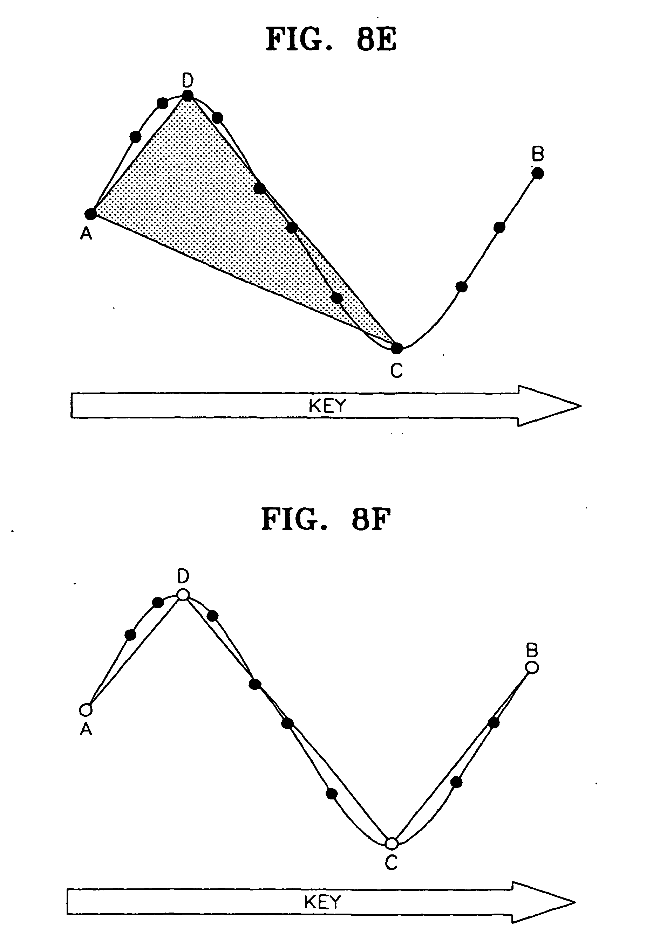

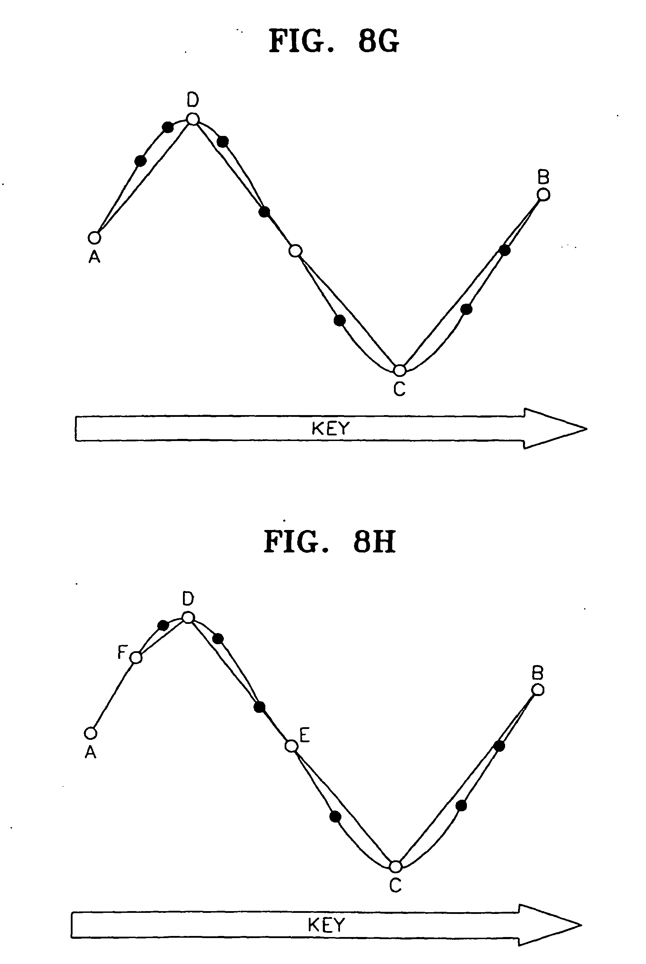

FIGS. 8a through 8h are diagrams for explaining a preferred embodiment of extracting break points using linear approximation according to the present invention. Each dot on the animation paths represents a break point. FIG. 8a is the original animation path. FIG. 8b shows a process for finding both end points (A, B) of the path. FIG. 8c shows a process for selecting a break point which is the closest to the original path. FIG. 8d shows break points, A, B, and C, which are selected first. FIG. 8e shows a process for extracting the second break points that are close to the original path. FIG. 8f shows break points, A, B, C, and D, which are selected second. FIG. 8g shows break points, A, B, C, D, and E, which are selected third. FIG. 8h shows break points, A, B, C, D, E, and F, which are selected fourth.

When the original animation path is given as in FIG. 8a, a process for finding break points (M break points, 2≤M≤N) representing an approximation path which has the smallest difference from the original path, among break points (N) on the original animation path, taking both end points A and B as starting points, is repeated. This process is shown in FIGS. 8b through 8h. At this time, extraction of break points may be repeated until it is determined that the approximation path is close enough to the original path.

Referring to the attached drawings, a method using an area difference will now be explained as a method for obtaining the difference between an approximation path and the real path.

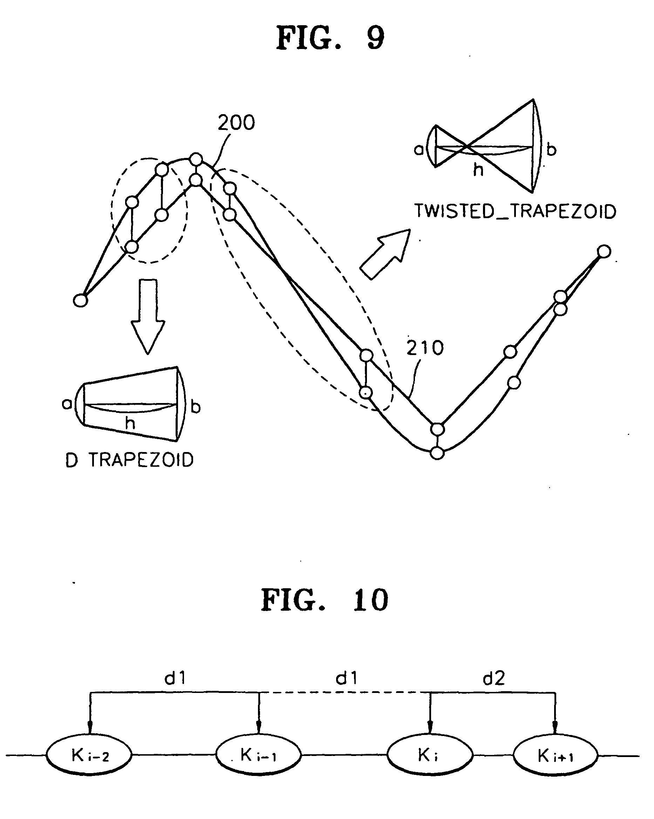

FIG. 9 is a diagram for explaining a method for obtaining the difference between a real animation path and an approximated animation path. Referring to FIG. 9, the difference between the two paths is expressed by a trapezoid or a twisted trapezoid. Equation 1 for obtaining the area of the trapezoid, and equation 2 for obtaining the area of the twisted trapezoid are provided below. The difference between the real animation path 200 and the approximated animation path 210 can be expressed by the sum of the area of the trapezoids and the area of the twisted trapezoids. The sum of the areas is the area difference ($D_A$) between the two paths as shown in equation 3.

$$D_{trapezoid} = \frac{(a+b)h}{2} \quad \ldots\ldots\ldots\ldots(1)$$

$$D_{twisted\_trapezoid} = \frac{1}{2}\frac{(a^2+b^2)}{(a+b)} \cdot h \ldots\ldots\ldots\ldots(2)$$

$$D_A = \sum_i D_{trapezoid} + \sum_j D_{twisted\_trapezoid} \quad \ldots\ldots\ldots\ldots(3)$$

Break points are extracted so that the area difference ($D_A$) of equation 3 is minimized. Thus, the break point minimization unit 102 extracts break points. By passing through the interpolator analysis unit 80, essential break points of the animation path are extracted. When lossless processing is needed, the number of extracted break points (M) may be the same as the number of the original break points.

In a position interpolator, key values represent a position in a 3D space having X, Y, and Z axes, and an animation path is represented by three curves on X, Y, and Z axes. The interpolator analysis unit 80 may extract break points on each axis, and at this time, break points at each axis may be different from those of other axes. The following table 2 shows the result of extracting new break points in the interpolator analysis unit 80 from a real path having 8 break points (P0, P1, P2, P3, P4, P5, P6, and P7).

Table 2

| Break Points | P0 | P1 | P2 | P3 | P4 | P5 | P6 | P7 |
|---|---|---|---|---|---|---|---|---|
| $kV_x$ | O | X | X | X | O | X | X | O |
| $kV_y$ | O | X | O | X | O | X | X | O |
| $kV_z$ | O | X | O | X | X | O | X | O |
| key | O | X | O | X | O | O | X | O |
| key_flag | 7 | - | 6 | - | 3 | 4 | - | 7 |

In table 2, key_flag denotes a key flag, and $kv_x$, $kv_y$, and $kv_z$ denote key values on X, Y, and Z axes, respectively. 'O' indicates that a key value corresponding to an x, y, or z coordinate of each break point is selected. For example, key value $kv_x$ is selected for break point P0. 'X' indicates that a key value corresponding to an axis on each break point is not selected. The key flag indicates the key values whose axes are selected among key values of X, Y, Z axes on each break point. For example, '7' indicates that all key values of all axes are selected, and '6' indicates that all key values, excluding the key value of the X axis, $kv_x$, are selected.

As shown in table 2, break points P1, P3, and P6 are regarded as unnecessary break points (marked by '-' in the key_flag space) because none of the key values of X, Y, and Z axes are selected on the break points. P0 and P7 are break points at both ends of the path, and key values of all axes are selected. At P2, the key value of the X axis is not selected, but key values on other axes are selected. Therefore, the interpolator analysis unit 80 determines keys corresponding to 5 break points, instead of the original 8 break points, and determines key values of each axis corresponding to selected break points. In table 2, 5 keys and 11 key values are needed. The corresponding relation between a key and key values may be represented by a key flag (key_flag), which is additionally transmitted. Thus, the number of keys and key values decreases from 32 of the real path (4 x 8 = 32) down to 16 keys and key values plus one additional key flag. Therefore, simplification in expression is achieved through the process.

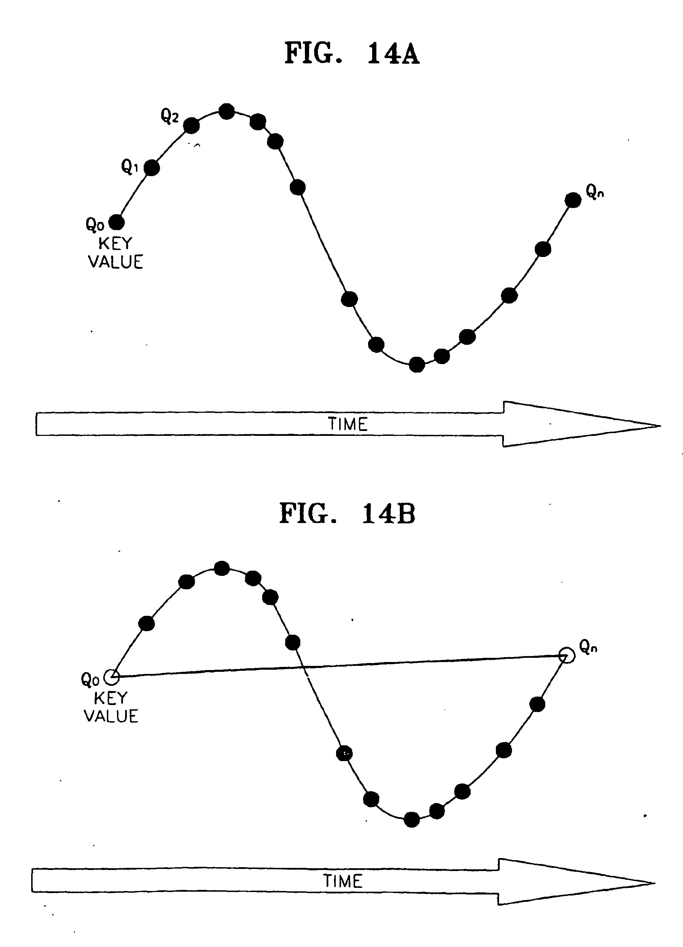

FIGS. 14a through 14f are diagrams for explaining another preferred embodiment of extracting break points using spherical linear approximation according to the present invention. This shows a method for reducing break points (also referred to as key frames) in an orientation interpolator.

FIG. 14a shows key values (=$Q_0$, $Q_1$, $Q_2$, ..., $Q_n$) on each break point with respect to n+1 time points on the original animation path, and the key values are marked by black points. As shown in FIG. 14b, two break points (=$Q_0$, $Q_n$) corresponding to two ends of the animation path are first selected. The selected points are shown as white points.

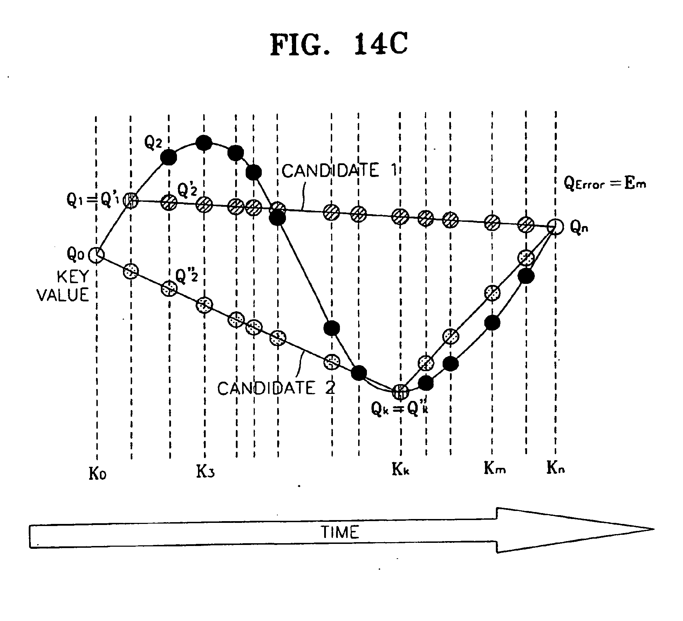

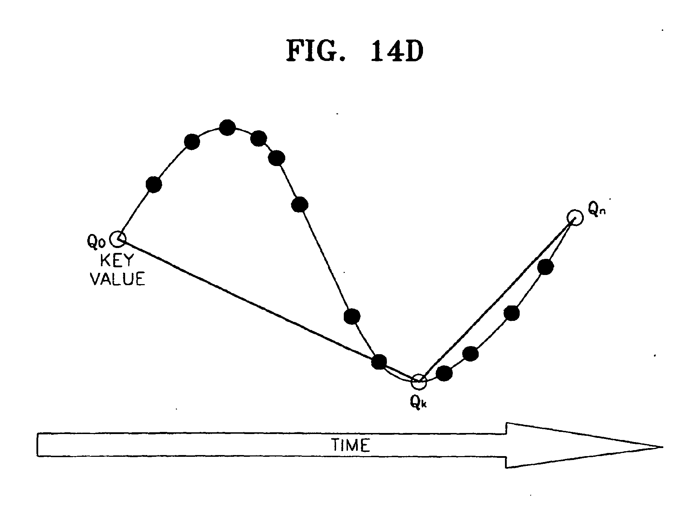

FIG. 14c shows a process for selecting a break point (the third break point) among the remaining break points excluding the two selected end break points. At this time, the number of methods for selecting one break point is (n-1). FIG. 14c shows an example in which two candidates (=$Q_1$, $Q_k$) are selected. For each of the (n-1) candidates, using the three selected break points, spherical linear interpolation is performed for key values of break points which are not selected. By comparing the original animation path and each of the (n-1) candidate animation paths obtained by interpolation, a candidate animation path which has the least path difference is selected. A break point corresponding to the selected candidate animation path is selected among the (n-1) candidate break points. As an example, FIG. 14d shows that the path of candidate 2 of FIG. 1 is selected. The error between paths is obtained by using average error $E_m$.

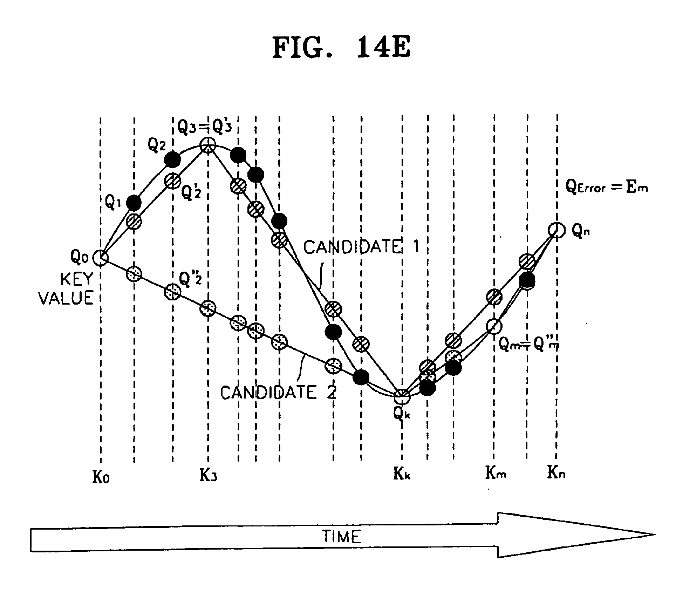

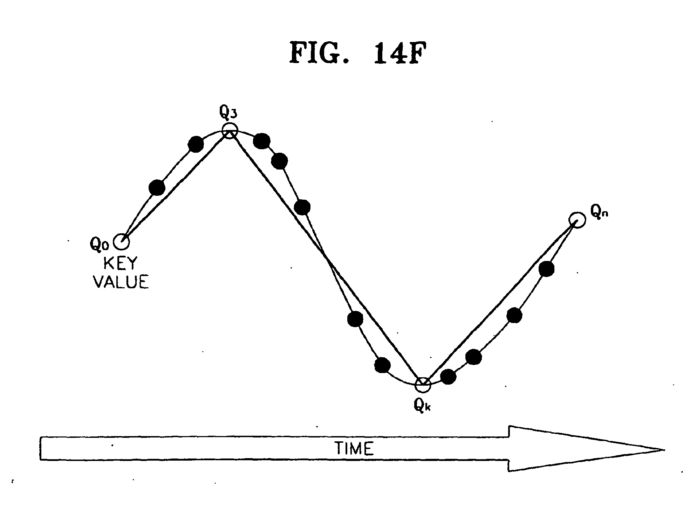

Referring to FIG. 14e, the fourth break point is selected by performing the process explained referring to FIGS. 14c and 14d, after selecting a candidate break point among the remaining break points excluding the three selected break points of FIG. 14d. For example, FIG. 14f shows that candidate 1 is selected. By repeating the break point selection process of FIG. 14e until an average error is less than an allowable error, break points, the number of which is the same as or less than the number of break points of the original path, are selected.

The average error $E_m$, which is mentioned above, will now be explained. A quantization error is defined as a differential rotation angle in a differential rotation transformation, which is the difference between the rotation transformation of the original animation path and that of a reconstructed animation path. That is, assuming that $(\vec{r}, \theta)$ denotes a key value of an orientation interpolator node and $(\vec{r}', \theta')$ denotes a key value reconstructed in the reconstruction unit 96 (vector $\vec{r}$ denotes a rotation axis, $\theta$ denotes a rotation amount, and the rotation amount satisfies $\theta \in [-\pi, \pi]$), when rotation transformation from an arbitrary position $\vec{x}$ to $\vec{y}$ and $\vec{y}'$ in a 3D space by $(\vec{r}, \theta)$ and $(\vec{r}', \theta')$ is performed, a quantization error occurring is calculated as the difference between $\vec{y}$ and $\vec{y}'$. Thus, if $\vec{e}(\vec{x})$ represents a quantization error vector, $\vec{e}(\vec{x}) = \vec{y} - \vec{y}'$. In quaternion expression, *X, Y,* and *Y'* are defined as the following equations 4:

$$\begin{cases} X = (0, \vec{x}) \\ Y = (0, \vec{y}) \qquad \dots\dots\dots\dots(4) \\ Y' = (0, \vec{y}') \end{cases}$$

If *Q* and *Q'* denote quaternion expressions of $(\vec{r}, \theta)$ and $(\vec{r}', \theta')$, , respectively, which represent the rotation transformation, the following equations 5 are derived:

$$Y = Q * X * Q^{\bullet}$$

$$X = Q^{\bullet} * Y * Q \quad \ldots\ldots\ldots\ldots\ldots(5)$$

Here, A*B indicates quaternion multiplication of A and B and A* denotes A's conjugate. Therefore, the following equation 6 is derived:

$$Y' = Q'*X*Q'^{\bullet} = Q'*Q^{\bullet} * Y * Q * Q'^{\bullet} = Q''*Y*Q''^{\bullet} \quad \ldots\ldots\ldots\ldots(6)$$

Here, $Q''$ is a value for indicating the rotational transformation relation between $\vec{y}$ and $\vec{y}'$, and is defined by the following equation 7:

$$Q'' = Q'*Q^{\bullet} \quad \ldots\ldots(7)$$

Therefore, if $\theta''$ denotes a differential rotation angle between $\vec{y}$ and $\vec{y}'$, $\theta''$ can be obtained using a quaternion conversion equation and equation 7 as shown in the following equation 8:

$$\theta'' = 2\cos^{-1} q_0'' = 2\cos^{-1}(Q' \bullet Q), \ \theta'' \in [0, \pi], \ q_0'' = Q' \bullet Q, \ \ldots\ldots(8)$$
$$(\bullet \ indicates \ inner \ product \ operation)$$

Equation 8 indicates an instantaneous quantization error occuring at a predetermined time among all animation break points. In order to derive an equation for obtaining a quantization error of all animation intervals, an instantaneous quantization error at a predetermined time t can be expressed as the following equation 9:

$$e(t) = 2\arccos(Q(t) \bullet Q'(t)) \quad \ldots\ldots(9)$$

If equation 9 is applied to all break point intervals of the animation by the orientation interpolators, average error $E_m$ and maximum error $E_p$ for the entire interval $[t_0, t_L]$ can be derived as the following equations 10:

$$\begin{cases} E_m = \sqrt{\dfrac{1}{t_L - t_0} \int_0^L e^2(t)dt} \\ E_p = \max |e(t)| \end{cases} \quad \ldots\ldots(10)$$

Here, partial sum $E_m^i$ is first obtained for interval $[t_{i-1}, t_i]$ in order to obtain $E_m$, using the following equation 11:

$$E_m^i = \int_{-1}^{i} e^2(t)dt = 4\int_{-1}^{i} \arccos^2(Q(t) \bullet Q'(t))dt \quad \ldots\ldots(11)$$

Meanwhile, the following equation 12 is also derived:

$$4\arccos^2(Q(t)\bullet Q'(t)) = \phi^2(\alpha),\; t = t_{i-1} + \alpha(t_i - t_{i-1}) \quad \ldots\ldots\ldots(12)$$

Therefore, the following equation 13 is derived:

$$E_m^i = (t_i - t_{i-1})\int_0^1 \phi^2(\alpha)d\alpha \quad \ldots\ldots(13)$$

Because it is difficult to obtain the definite integral of function $\phi^2(\alpha)$ between 0 and 1, approximation is performed as shown in the following equations 14:

$$\phi(\alpha) \cong \phi(0) + \alpha(\phi(1) - \phi(0))$$
$$\phi^2(\alpha) \cong \phi^2(0) + \alpha^2(\phi(1) - \phi(0))^2 + 2\alpha\phi(0)(\phi(1) - \phi(0))\ldots\ldots(14)$$

Here,

$$\cos\frac{\phi(0)}{2} = Q(t_{i-1})\bullet Q'(t_{i-1}), \quad \cos\frac{\phi(1)}{2} = Q(t_i)\bullet Q'(t_i) \quad \ldots\ldots(15).$$

Using the approximated function 14, partial sum $E_m^i$ is be obtained as the following equation 16:

$$E_m^i \cong \frac{1}{3}(t_i - t_{i-1})(\phi^2(0) + \phi^2(1) + \phi(0)\phi(1)) \quad \ldots\ldots(16)$$

These equations can be rearranged as the following equation 17:

$$E_m^i \cong \frac{4}{3}(t_i - t_{i-1})(\arccos^2(Q(t_{i-1})\bullet Q'(t_{i-1})) + \arccos^2(Q(t_i)\bullet Q'(t_i))$$
$$+ \arccos(Q(t_{i-1})\bullet Q'(t_{i-1}))\arccos(Q(t_i)\bullet Q'(t_i))) \quad \ldots\ldots\ldots\ldots(17)$$

Partial sum $E_m^i$ is summed over the entire interval $[t_0, t_L]$ to obtain the average error $E_m$ as shown in the following equation 18:

$$E_m \cong \sqrt{\frac{1}{t_L - t_0}\sum_{i=0}^{L} E_m^i} \quad \ldots(18)$$

To obtain maximum error $E_p$, a maximum value is selected from among the values of the maximum error $E_p^i$ in each interval $[t_{i-1}, t_i]$, which is obtained by the following equation 19:

$$E_p' \cong \max|e(t)| = \max 2|\arccos(Q(t) \bullet Q'(t))| \quad .....(19)$$

Using the approximation function described above, $E_p^i$ can be approximated as shown in the following equation 20:

$$E_p^i \cong \max(\phi(0), \phi(1)) = \max\{2|\arccos(Q(t_{i-1}) \bullet Q'(t_{i-1}))|, 2|\arccos(Q(t_i) \bullet Q'(t_i))|\} \quad ....(20)$$

Maximum error $E_p$ in the entire interval $[t_0, t_L]$ is expressed by the following equation 21:

$$E_p \cong \max E_p^i, \quad for \; i = 1, 2, ..., L \quad .....(21)$$

The interpolator analysis unit 80 shown in FIG. 6 sends information 114 on the number of keys, the minimum value and maximum value of normalized key values, the resolutions of key and key value, and a key flag, to the entropy encoder 86. At this time, the interpolator analysis unit 80 sends keys 110 to the key coder 82, and sends information on key values, including the minimum value and maximum value of normalized key values to the key value coder 84.

Coding keys and key values in the key coder 82 and key value coder 84 will now be explained. Keys and key values are DPCM quantization method compressed in the key coder 82 and the key value coder 84, respectively. Quantized information together with other information is sent to the entropy encoder 86, and output as a bit stream finally compression encoded through the output terminal OUT3. For example, the DPCM quantizer 104 of the key coder 82 DPCM quantization codes (that is, codes the difference between the current value and the immediatley previous value) a key sent from the interpolator analysis unit 80, and outputs the coded result to the entropy encoder 86. At this time, the DPCM quantizer 106 of the key value coder 84 DPCM quantization codes (that is, codes the difference between the current value and the immediatley previous value) key values, and the minimum value and maximum value of the key values, which are sent by the interpolator analysis unit 80, and outputs the coded result to the entropy encoder 86.

FIG. 10 is a diagram of a quantization process and shows the DPCM method which is generally used. Referring to FIG. 10, in case of key (k), a final error (e) is quantization compressed as the following equation 22. FIG. 10 explains equation 22. That is, the difference (d1) between an immediately previous value ($K_{i-1}$) and the previous value ($K_{i-2}$) thereof is obtained. The difference value (d1) is added to the immediately previous value ($K_{i-1}$) to generate an approximated value ($\hat{K}_i$). Then, the final error (e) is obtained as the difference between the approximated value ($\hat{K}_i$) and the current value ($K_i$). Meanwhile, the error (e) may be simply obtained as the difference between the current value ($K_i$) and the immediately previous value ($K_{i-1}$).

$$K_i = 0, \quad for \; i < 0$$
$$d1 = K_{i-1} - K_{i-2},$$
$$\hat{K}_i = K_{i-1} + d1,$$
$$d2 = K_i - \hat{K}_i,$$
$$e = d2 \qquad .............(22)$$

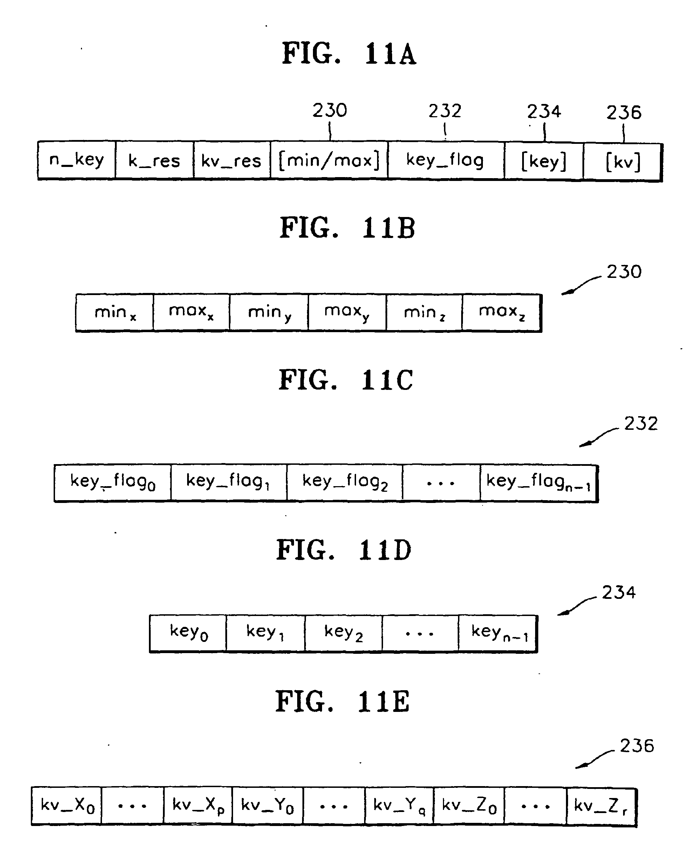

FIGS. 11a through 11e are diagrams for showing formats of coded bit streams according to the present invention.

FIG. 11a shows the format of a coded bit stream according to the present invention, which includes the number of keys (n_key), the resolution of keys (k_res), the resolution of key values (kv_res), the minimum value and maximum value of key values array ([min/max]) 230, a key flag array ([key_flag]) 232, a key array ([key]) 234, and a key values array ([kv]) 236. Here, [ ] denotes an array. FIG. 11b shows the format of the minimum value and maximum value of key values array 230 of FIG. 11a, FIG. 11c shows the format of the key flag array 232, FIG. 11d shows the format of the key array 234, and FIG. 11e shows the format of key values array 236.

The minimum value and maximum value of key values array 230 of FIG. 11a are formed of the minimum values of X, Y, and Z axes ($min_x$, $min_y$, and $min_z$) and the maximum values of X, Y, and Z axes ($max_x$, $max_y$, $max_z$), as shown in FIG. 11b. The key flag array 232 is formed of n key flags ($key\_flag_0$, $key\_flag_1$, $key\_flag_2$, $key\_flag_3$,..., $key\_flag_{n-1}$). Here, n denotes the number of keys. The key array 234 is formed of n keys ($key_0$, $key_1$, $key_2$,..., $key_{n-1}$). Here, data of keys and key flags for breakpoints which are classified as unnecessary ones, for example, breakpoints P1, P3 and P6 of Table 2, may be excluded from the key array or the key flag array. Thus, the key array and/or the key flag array may consist of data less than the number (n) of the original keys. The key values array 236 is formed of p first key values ($kv\_X_0$, $kv\_X_1$, ..., $kv\_X_{p-1}$), q second key values ($kv\_Y_0$, $kv\_Y_1$, ..., $kv\_Y_{q-1}$), and r third key values ($kv\_Z_0$, $kv\_Z_1$, ..., $kv\_Z_{1-1}$). Here, p≤n, q≤n, and r≤n.

Meanwhile, the apparatus and method for reconstructing an animation path according to the present invention is performed as the inverse of the compression process. The entropy decoder 90 of FIG. 7 receives an encoded bit stream through the input terminal IN4, entropy decodes the bit stream, and outputs the entropy decoded result to both the key decoder 92 and the key value decoder 94. The key decoder 92 and the key value decoder 94 receive quantized keys and key values, respectively, which are the result of entropy decoding, and, using additional information such as the key flag, reconstruct the data before quantization. That is, the key decoder 92 receives the entropy decoded result, and decodes the keys, and the key value decoder 94 receives the entropy decoded result, and decodes the key values. For this, the key decoder 92 may be implemented as the DPCM dequantizer 126, and the key value decoder 94 may be implemented as the DPCM dequantizer 128. Each DPCM dequantizer 126 or 128 decodes the input data which is decoded in the entropy decoder 90 by DPCM dequantization method.

The interpolator reconstruction unit 96 receives the data decoded in the key decoder 92 and the key value decoder 94, and reconstructs the original animation path. The interpolator reconstruction unit 96 receives information 124 on the number of keys, the minimum value and maximum value of normalized key values, the resolutions of keys and key values, and key flags, from the entropy decoder 90, keys 120 from the key decoder 92, and information 122 on key values and the minimum value and maximum value of normalized key values from the key value decoder 94. The interpolator reconstruction unit 94 reconstructs empty key values by linear interpolation, using input information. For example, in table 2, the key value of the X axis on break point P2 can be reconstructed by linear interpolation, using key values of P0 and P4. For this, the interpolator reconstruction unit 96 may be implemented as a key & key value reconstruction unit 95. The reconstructed animation path in the form of (key, key values) is output through the output terminal OUT4.

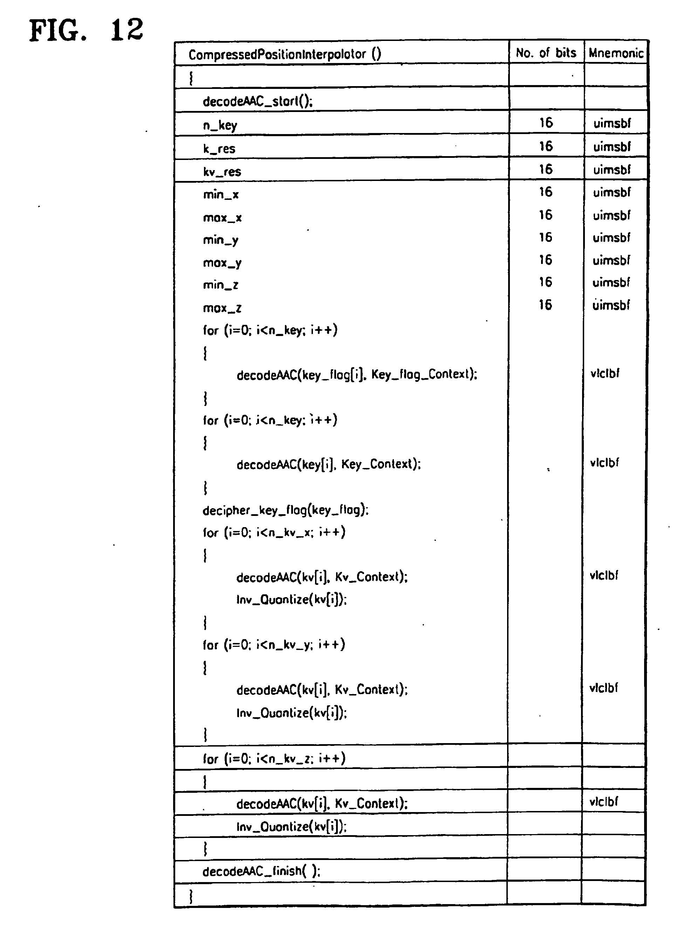

FIG. 12 is a table for explaining a decoding process expressed in a program language according to the present invention. The table is also referred to as a bit stream syntax.

Referring to the attached drawings, the method for compressing an animation path using linear approximation according to the present invention will now be compared with the prior art method for interpolator compression using the MPEG-4 BIFS.

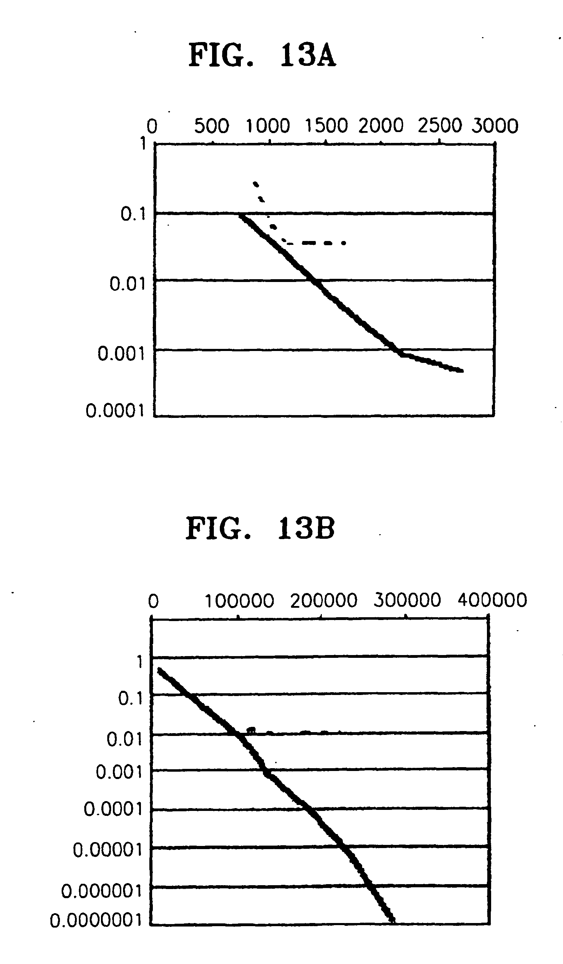

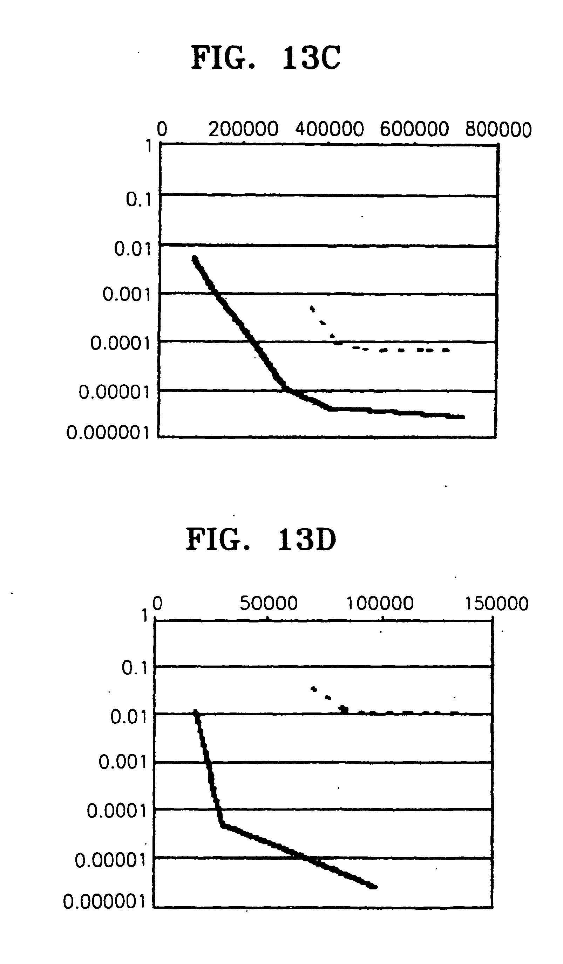

FIGS. 13a through 13d are graphs of experimental animation sequences for comparing the compression method of the present invention with the prior art compression method. The vertical axis represents distortion degrees, the horizontal axis represents the number of bits, the method for compressing an animation path according to the present invention is marked by thick lines, and the prior art compression method is marked by dotted lines. FIGS. 13a through 13d show the results of simulations, in each of which a different animation path is applied. The method of the present invention shows increasingly better results in order of FIGS. 13b-13a-13d-13c. At the same bit rates, the compression method of the present invention showed much better picture quality than the prior art BIFS method, while at the same picture quality, the compression method of the present invention showed much better compression rate.

As described above, an interpolator expression of an animation path is used for simplification of the path using break points. However, in the prior art method, the interval between each key is uniformly formed in the expression of the path, and therefore, break points are oversampled. However, in the present invention, by analyzing break points, a simplified encoded bit stream having a minimum number of break points is obtained. The DPCM compression maintains higher linear correlation between break points, and therefore efficient compression using the higher correlation is enabled.

**Claims**

1.    A method for compressing a 3D animation path, comprising the steps of:

(a) selecting two break points on both end points among the break points on the animation path;

(b) selecting one break point among the remaining break points excluding the two selected break points;

(c) interpolating for key values of the remaining break points excluding the selected break points, using the selected break points;

(d) forming an approximated path based on the selected break points and the interpolated key values, selecting an approximated animation path which has the smallest difference between the original animation path and the approximated animation path, and selecting break points corresponding to the selected animation path; and

(e) selecting one break point among the remaining break points excluding the break points selected in steps (a) and (b), and repeating steps (c) to (e) until the path difference is less than an allowable difference;

wherein steps (a) to (e) are repeated for each of three axes, and the break points on each axis are different from those of other axes;

the method further comprising recording a key flag for each break point indicating information on which any of the three axes is selected for the key value of the break point.

2. The method of claim 1, wherein the difference is expressed by the sum of areas of trapezoids or twisted trapezoids which are formed by the original animation path and the approximated animation path.

3. An apparatus for compressing a 3D animation path comprising:

an interpolator analysis unit (80) for extracting a number of break points from an animation path and outputting keys and key values corresponding to the break points;

a key coder (82) for coding keys output from the interpolator analysis unit;

a key value coder (84) for coding key values output from the interpolator analysis unit; and

an entropy encoder (86) for entropy encoding the keys and key values which are coded in the key coder and key value coder, respectively, and outputting encoded bit streams,

wherein the interpolator analysis unit (80) is arranged to extract both end points of the original animation path as starting break points, to extract break points representing an approximated path which has the smallest difference from the original animation path, among the break points of the original animation path, and to repeat this process until an approximated path is close to the original animation path;

wherein the interpolator analysis unit (80) is arranged to extract the break points on each of three axes so that the break points on each axis are different from those of other axes, and to record a key flag for each break point indicating information on which any of the three axes is selected for the key value of the break point.

4. The apparatus of claim 3, wherein the interpolator analysis unit (80) determines the number of break points so that the difference between an approximated animation path, which is obtained by the predetermined number of break points extracted among the break points of the original animation path, and the original animation path is minimized.

5. The apparatus of claim 3, wherein the key coder (82) is arranged to code the keys output from the interpolator analysis unit by Differential Pulse Code Modulation (DPCM) quantization method.

6. The apparatus of claim 3, wherein the key value coder (84) is arranged to code the key values output from the interpolator analysis unit by Differential Pulse Code Modulation (DPCM) quantization method.

7. The apparatus of claim 4, wherein break points are determined so that the area difference between the original animation path and the approximated animation path is the smallest.

8. The apparatus of claim 5 or 6, wherein the DPCM quantization codes the difference between a current value and the immediate previous value, or codes the difference between a current value and an approximated value which is obtained by adding the immediately previous value to the difference between the immediately previous value and the previous value thereof.

9. An apparatus for reconstructing a 3D animation path, comprising:

an entropy decoder (90) for receiving a bit stream in which keys, key values and key flags for break points on three axes are entropy encoded, wherein the break points on each axis are different from those of other axes and the key flag for each break point indicates information on which any of the three axes is selected for the key value of the break point, and entropy decoding the bit stream;
a key decoder (92) for receiving the entropy decoded result and decoding the keys;
a key value decoder (94) for receiving the entropy decoded result and decoding the key values; and
an interpolator reconstruction unit (96) for identifying empty key values based on the key flags, obtaining the empty key values by linear interpolation based on the keys and key values decoded in the key decoder and the key value decoder, respectively, and reconstructing the animation path in the form of keys and key values for the break points.

10. The apparatus of claim 9, wherein the key decoder (92) decodes the entropy decoded result which is input from the entropy decoder by DPCM dequantization method.

11. The apparatus of claim 9, wherein the key value decoder (94) decodes the entropy decoded result which is input from the entropy decoder by DPCM dequantization method.

12. A method for reconstructing a 3D animation path, comprising the steps of:

receiving a bit stream in which keys, key values and key flags for break points on three axes are entropy encoded, wherein the break points on each axis are different from those of other axes and the key flag for each break point indicates information on which any of the three axes is selected for the key value of the break point, and entropy decoding the bit stream;
decoding the keys and the key values from the result of entropy decoding; and
identifying empty key values based on the key flags, and obtaining the empty key values by linear interpolation based on the decoded keys and key values, to reconstruct the animation path in the form of keys and key values for the break points.

## Patentansprüche

1. Verfahren zum Komprimieren eines 3D-Animationswegs umfassend die Schritte:

(a) Auswählen zweier Unterbrechungspunkte an beiden Endpunkten unter den Unterbrechungspunkten des Animationsweges;
(b) Auswählen eines Unterbrechungspunkts unter den übrigen Unterbrechungspunkten außer den beiden ausgewählten Unterbrechungspunkten;
(c) Interpolieren nach Schlüsselwerten der übrigen Unterbrechungspunkte außer den ausgewählten Unterbrechungspunkten unter Verwendung der ausgewählten Unterbrechungspunkte;
(d) Bilden eines angenäherten Weges ausgehend von den ausgewählten Unterbrechungspunkten und den interpolierten Schlüsselwerten, Auswählen eines angenäherten Animationswegs, der die geringste Differenz zwischen dem ursprünglichen Animationsweg und dem angenäherten Animationsweg aufweist, und Auswählen von Unterbrechungspunkten entsprechend dem ausgewählten Animationsweg; und
(e) Auswählen eines Unterbrechungspunkts unter den übrigen Unterbrechungspunkten außer den in den Schritten (a) und (b) ausgewählten Unterbrechungspunkten und Wiederholen der Schritte (c) bis (e), bis die Wegdifferenz geringer ist als eine zulässige Differenz;

wobei die Schritte (a) bis (e) für jede der drei Achsen wiederholt werden und die Unterbrechungspunkte auf jeder Achse sich von denen anderer Achsen unterscheiden;
wobei das Verfahren ferner umfasst: Aufzeichnen einer Schlüsselmarkierung für jeden Unterbrechungspunkt, die Information dazu angibt, welche der drei Achsen für den Schlüsselwert des Unterbrechungspunkts ausgewählt ist.

2. Verfahren nach Anspruch 1, wobei die Differenz durch die Summe von Flächen von Trapezoiden oder verdrehten Trapezoiden ausgedrückt wird, die durch den ursprünglichen Animationsweg und den angenäherten Animationsweg gebildet sind.

3. Vorrichtung zum Komprimieren eines 3D-Animationswegs umfassend:

eine Interpolatoranalyseeinheit (80) zum Extrahieren einer Anzahl von Unterbrechungspunkten aus einem Animationsweg und Ausgeben von Schlüsseln und Schlüsselwerten, die den Unterbrechungspunkten entsprechen;

einen Schlüsselkodierer (82) zum Kodieren von Schlüsseln, die aus der Interpolatoranalyseeinheit ausgegeben sind;

einen Schlüsselwertkodierer (84) zum Kodieren von Schlüsselwerten, die aus der Interpolatoranalyseeinheit ausgegeben sind; und

einen Entropiekodierer (86) zum Entropiekodieren der Schlüssel und Schlüsselwerte, die im Schlüsselkodierer bzw. im Schlüsselwertkodierer kodiert sind, und Ausgeben der kodierten Bitströme,

wobei die Interpolatoranalyseeinheit (80) so angeordnet ist, dass sie beide Endpunkte des ursprünglichen Animationswegs als Startunterbrechungspunkte extrahiert, Unterbrechungspunkte, die einen angenäherten Weg darstellen, der die geringste Differenz zum ursprünglichen Animationsweg aufweist, unter den Unterbrechungspunkten des ursprünglichen Animationswegs extrahiert und diesen Prozess wiederholt, bis ein angenäherter Weg nahe dem ursprünglichen Animationsweg ist;

wobei die Interpolatoranalyseeinheit (80) so angeordnet ist, dass sie die Unterbrechungspunkte jeder der drei Achsen extrahiert, so dass die Unterbrechungspunkte auf jeder Achse sich von denen anderer Achsen unterscheiden, und eine Schlüsselmarkierung für jeden Unterbrechungspunkt aufzeichnet, die Information dazu angibt, welche der drei Achsen für den Schlüsselwert des Unterbrechungspunkts ausgewählt ist.

4. Vorrichtung nach Anspruch 3, wobei die Interpolatoranalyseeinheit (80) die Anzahl an Unterbrechungspunkten bestimmt, so dass die Differenz zwischen einem angenäherten Animationsweg, der durch die bestimmte Anzahl an Unterbrechungspunkten erhalten ist, die aus den Unterbrechungspunkten des ursprünglichen Animationswegs extrahiert sind, und dem ursprünglichen Animationsweg minimiert ist.

5. Vorrichtung nach Anspruch 3, wobei der Schlüsselkodierer (82) so angeordnet ist, dass er die Schlüssel, die von der Interpolatoranalyseeinheit ausgegeben sind, nach dem Differentialimpulskodemodulation-Quantisierungsverfahren (DPCM, Differential Pulse Code Modulation) kodiert.

6. Vorrichtung nach Anspruch 3, wobei der Schlüsselwertkodierer (84) so angeordnet ist, dass er die Schlüsselwerte, die von der Interpolatoranalyseeinheit ausgegeben sind, nach dem Differentialimpulskodemodulation-Quantisierungsverfahren (DPCM, Differential Pulse Code Modulation) kodiert.

7. Vorrichtung nach Anspruch 4, wobei Unterbrechungspunkte so bestimmt werden, dass die Flächendifferenz zwischen dem ursprünglichen Animationsweg und dem angenäherten Animationsweg am geringsten ist.

8. Vorrichtung nach Anspruch 5 oder 6, wobei die DPCM-Quantisierung die Differenz zwischen einem anstehenden Wert und dem unmittelbar vorhergehenden Wert kodiert, oder die Differenz zwischen einem anstehenden Wert und einem angenäherten Wert kodiert, der durch Addieren des unmittelbar vorhergehenden Werts zur Differenz zwischen dem unmittelbar vorhergehenden Wert und dem vorhergehenden Wert davon erhalten ist.

9. Vorrichtung zur Rekonstruktion eines 3D-Animationswegs umfassend:

einen Entropiedekodierer (90) zum Empfangen eines Bitstroms, in dem Schlüssel, Schlüsselwerte und Schlüsselmarkierungen für Unterbrechungspunkte auf drei Achsen entropiekodiert sind, wobei die Unterbrechungspunkte auf jeder Achse sich von denen anderer Achsen unterscheiden und die Schlüsselmarkierung für jeden Unterbrechungspunkt Information dazu angibt, welche der drei Achsen für den Schlüsselwert des Unterbrechungspunkts ausgewählt ist, und Entropiedekodieren des Bitstroms;

einen Schlüsseldekodierer (92) zum Empfangen des entropiedekodierten Ergebnisses und Dekodieren der Schlüssel;

einen Schlüsselwertdekodierer (94) zum Empfangen des entropiedekodierten Ergebnisses und Dekodieren der Schlüsselwerte; und

eine Interpolatorrekonstruktionseinheit (96) zum Identifizieren leerer Schlüsselwerte ausgehend von den Schlüsselmarkierungen, Ermitteln der leeren Schlüsselwerte durch Linearinterpolation ausgehend von den Schlüsseln und Schlüsselwerten, die im Schlüsseldekodierer bzw. dem Schlüsselwertdekodierer dekodiert sind, und Rekonstruieren des Animationswegs in Form von Schlüsseln und Schlüsselwerten für die Unterbrechungspunkte.

10. Vorrichtung nach Anspruch 9, wobei der Schlüsseldekodierer (92) das entropiedekodierte Ergebnis, das vom Entropiedekodierer eingegeben ist, nach dem DPCM-Dequantisierungsverfahren dekodiert.

**EP 1 209 626 B1**

**11.** Vorrichtung nach Anspruch 9, wobei der Schlüsselwertdekodierer (94) das entropiedekodierte Ergebnis, das vom Entropiedekodierer eingegeben ist, nach dem DPCM-Dequantisierungsverfahren dekodiert.

**12.** Verfahren zur Rekonstruktion eines 3D-Animationswegs, umfassend die Schritte:

Empfangen eines Bitstroms, in dem Schlüssel, Schlüsselwerte und Schlüsselmarkierungen für Unterbrechungspunkte auf drei Achsen entropiekodiert werden, wobei die Unterbrechungspunkte auf jeder Achse sich von denen anderer Achsen unterscheiden und die Schlüsselmarkierung für jeden Unterbrechungspunkt Information dazu angibt, welche der drei Achsen für den Schlüsselwert des Unterbrechungspunkts ausgewählt ist, und Entropiedekodieren des Bitstroms;
Dekodieren der Schlüssel und der Schlüsselwerte aus dem Ergebnis der Entropiedekodierung; und
Identifizieren von leeren Schlüsselwerten ausgehend von den Schlüsselmarkierungen und Ermitteln der leeren Schlüsselwerte durch Linearinterpolation ausgehend von den dekodierten Schlüsseln und Schlüsselwerten zum Rekonstruieren des Animationswegs in Form von Schlüsseln und Schlüsselwerten für die Unterbrechungspunkte.

**Revendications**

**1.** Procédé permettant de compresser une trajectoire d'animation en trois dimensions, lequel procédé comprend les étapes qui consistent à :

(a) sélectionner deux points de cassure sur chacun des deux points finaux de la trajectoire d'animation,
(b) sélectionner un point de cassure parmi les points de cassure restants en excluant les deux points de cassure sélectionnés,
(c) interpoler les valeurs de clé des points de cassure restants en dehors des points de cassure sélectionnés et en employant les points de cassure sélectionnés,
(d) former une trajectoire approchée à partir des points de cassure sélectionnés et des valeurs de clé interpolées, sélectionner la trajectoire d'animation approchée qui présente la plus petite différence entre la trajectoire d'animation initiale et la trajectoire d'animation approchée et sélectionner les points de cassure qui correspondent au chemin d'animation sélectionné et
(e) sélectionner un point de cassure parmi les points de cassure restants en dehors des points de cassure sélectionnés pendant les étapes (a) et (b) et répéter les étapes (c) à (e) jusqu'à ce que la différence de trajectoire soit plus petite qu'une différence admissible ;

dans lequel les étapes (a) à (e) sont répétées pour chacun des trois axes avec sur chaque axe des points de cassure différents de ceux des autres axes,
le procédé comprenant en outre l'enregistrement pour chacun des points de cassure d'un indicateur de clé qui indique lequel des trois axes a été sélectionné pour la valeur de clé du point de cassure.

**2.** Procédé selon la revendication 1, dans lequel la différence est exprimée par la somme de la surface des trapézoïdes ou des trapézoïdes tordus qui sont formés par la trajectoire d'animation initiale et par la trajectoire d'animation approchée.

**3.** Appareil de compression d'une trajectoire d'animation, qui comprend :

une unité (80) d'analyse à interpolateur qui extrait un certain nombre de points de cassure à partir d'une trajectoire d'animation et qui fournit des clés et des valeurs de clé qui correspondent aux points de cassure,
un dispositif (82) de codage de clés qui code les clés délivrées par l'unité d'analyse à interpolateur,
un dispositif (84) de codage de valeurs de clé qui code les valeurs de clé délivrées par l'unité d'analyse à interpolateur,
un dispositif (86) de codage en entropie qui code en entropie les clés et les valeurs de clé codées respectivement dans le dispositif de codage de clés et dans le dispositif de codage de valeurs de clé et qui délivre un train de bits encodés,

dans lequel l'unité (80) d'analyse à interpolateur est agencée pour extraire les points de cassure sur chacun des trois axes de manière à ce que les points de cassure sur chaque axe soient différents de ceux des autres axes et pour enregistrer pour chaque point de cassure un indicateur de clé qui indique lequel des trois axes a été sélectionné pour la valeur de clé du point de cassure.

4.  Appareil selon la revendication 3, dans lequel l'unité (80) d'analyse à interpolateur détermine le nombre de points de cassure de manière à minimiser la différence entre une trajectoire d'animation approchée, qui est obtenue à partir du nombre prédéterminé de points de cassure choisis parmi les points de cassure de la trajectoire d'animation initiale, et la trajectoire d'animation initiale.

5.  Apparei! selon la revendication 3, dans lequel le dispositif (82) de codage de clés est agencé pour coder les valeurs de clé délivrées par l'unité (80) d'analyse à interpolateur par la méthode de quantification par modulation différentielle du code d'impulsion ("differential pulse code modulation" - DPCM).

6.  Appareil selon la revendication 3, dans lequel le dispositif (84) de codage de valeurs de clé est agencé pour coder les valeurs de clé délivrées par l'unité (80) d'analyse à interpolateur par la méthode de quantification par modulation différentielle du code d'impulsion (DPCM).

7.  Appareil selon la revendication 4, dans lequel les points de cassure sont déterminés de manière à ce que la différence de surface entre la trajectoire d'animation initiale et la trajectoire d'animation approchée soit la plus petite possible.

8.  Appareil selon l'une quelconque des revendications 5 ou 6, dans lequel la quantification DPCM code la différence entre une valeur en cours et la valeur immédiatement précédente ou code la différence entre une valeur en cours et une valeur approchée qui est obtenue en ajoutant la valeur immédiatement précédente à la différence entre la valeur immédiatement précédente et sa valeur précédente.

9.  Appareil de reconstitution d'une trajectoire d'animation en trois dimensions, qui comprend :

    un dispositif (90) de décodage en entropie qui reçoit un train de bits dans lequel les clés, les valeurs de clé et les indicateurs de clé des points de cassure sur les trois axes sont codés en entropie, les points de cassure sur chaque axe étant différents de ceux des autres axes, et dans lequel l'indicateur de clé de chaque point de cassure indique lequel des trois axes a été sélectionné pour les valeurs de clé du point de cassure, et décodant en entropie le train de bits,
    un dispositif (92) de décodage de clés qui reçoit le résultat décodé en entropie et qui décode les clés,
    un dispositif (94) de décodage de valeurs de clé qui reçoit le résultat décodé en entropie et qui décode les valeurs de clé et
    une unité (96) de reconstitution à interpolateur qui identifie les valeurs de clé vides à partir des indicateurs de clé, qui obtient les valeurs de clé vides par interpolation linéaire à partir des clés et des valeurs des codes décodées respectivement dans le dispositif de décodage de clés et dans le dispositif de décodage de valeurs de clé et qui reconstitue la trajectoire d'animation sous forme de clés et de valeurs de clé pour les points de cassure.

10. Appareil selon la revendication 9, dans lequel le dispositif (92) de décodage de clés décode le résultat décodé en entropie qui provient du dispositif de décodage en entropie en utilisant la méthode de quantification DPCM.

11. Appareil selon la revendication 9, dans lequel le dispositif (94) de décodage de valeurs de clé décode le résultat décodé en entropie qui provient du dispositif de décodage en entropie en utilisant la méthode de quantification DPCM.

12. Procédé de reconstitution d'une trajectoire d'animation en trois dimensions, qui comprend les étapes qui consistent à :

    recevoir un train de bits dans lequel les clés, les valeurs de clé et les indicateurs de clé pour les points de cassure sur les trois axes sont encodés en entropie, les points de cassure de chaque axe étant différents de ceux des autres axes et l'indicateur de clé de chaque point de cassure indiquant lequel des trois axes a été sélectionné pour la valeur de clé du point de cassure, et décoder le train de bits en entropie,
    décoder les clés et les valeurs de clé à partir du résultat du décodage en entropie, et
    identifier des valeurs de clé vides à partir des identificateurs de clé et obtenir des valeurs de clé vides par interpolation linéaire des clés et valeurs de clé décodées afin de reconstituer la trajectoire d'animation sous forme de clés et de valeurs de clé pour les points de cassure.

# FIG. 1

# FIG. 2

```
ScalarInterpolator {

    eventin SFFloat set_fraction

    exposedField MFFloat key [ ]

    exposedField MFFloat keyValue [ ]

    eventout SFFloat value_changed

}
```

# FIG. 3

# FIG. 4A

# FIG. 4B

# FIG. 5A

IN3 → 80 INTERPOLATOR ANALYSIS UNIT → 82 KEY CODER / 84 KEY VALUE CODER → 86 ENTROPY ENCODER → OUT3

# FIG. 5B

IN4 → 86 ENTROPY DECODER → 92 KEY DECODER / 94 KEY VALUE DECODER → 96 INTERPOLATOR RECONSTRUCTION UNIT → OUT4

# FIG. 6

EP 1 209 626 B1

## FIG. 7

# FIG. 8A

KEY

# FIG. 8B

B

A

KEY

# FIG. 8C

KEY

# FIG. 8D

KEY

# FIG. 8E

KEY

# FIG. 8F

KEY

# FIG. 8G

# FIG. 8H

# FIG. 9

200

TWISTED_TRAPEZOID

210

D TRAPEZOID

# FIG. 10

d1　　　　d1　　　　d2

$K_{i-2}$　　$K_{i-1}$　　$K_i$　　$K_{i+1}$

# FIG. 11A

230     232     234     236

| n_key | k_res | kv_res | [min/max] | key_flag | [key] | [kv] |
|---|---|---|---|---|---|---|

# FIG. 11B

230

| min$_x$ | max$_x$ | min$_y$ | max$_y$ | min$_z$ | max$_z$ |
|---|---|---|---|---|---|

# FIG. 11C

232

| key_flag$_0$ | key_flag$_1$ | key_flag$_2$ | ... | key_flag$_{n-1}$ |
|---|---|---|---|---|

# FIG. 11D

234

| key$_0$ | key$_1$ | key$_2$ | ... | key$_{n-1}$ |
|---|---|---|---|---|

# FIG. 11E

236

| kv_X$_0$ | ... | kv_X$_p$ | kv_Y$_0$ | ... | kv_Y$_q$ | kv_Z$_0$ | ... | kv_Z$_r$ |
|---|---|---|---|---|---|---|---|---|

# FIG. 12

| CompressedPositionInterpolator () | No. of bits | Mnemonic |
|---|---|---|
| } | | |
| decodeAAC_start(); | | |
| n_key | 16 | uimsbf |
| k_res | 16 | uimsbf |
| kv_res | 16 | uimsbf |
| min_x | 16 | uimsbf |
| max_x | 16 | uimsbf |
| min_y | 16 | uimsbf |
| max_y | 16 | uimsbf |
| min_z | 16 | uimsbf |
| max_z | 16 | uimsbf |
| for (i=0; i<n_key; i++) | | |
| { | | |
| decodeAAC(key_flag[i], Key_flag_Context); | | vlclbf |
| } | | |
| for (i=0; i<n_key; i++) | | |
| { | | |
| decodeAAC(key[i], Key_Context); | | vlclbf |
| } | | |
| decipher_key_flag(key_flag); | | |
| for (i=0; i<n_kv_x; i++) | | |
| { | | |
| decodeAAC(kv[i], Kv_Context); | | vlclbf |
| Inv_Quantize(kv[i]); | | |
| } | | |
| for (i=0; i<n_kv_y; i++) | | |
| { | | |
| decodeAAC(kv[i], Kv_Context); | | vlclbf |
| Inv_Quantize(kv[i]); | | |
| } | | |
| for (i=0; i<n_kv_z; i++) | | |
| { | | |
| decodeAAC(kv[i], Kv_Context); | | vlclbf |
| Inv_Quantize(kv[i]); | | |
| } | | |
| decodeAAC_finish( ); | | |
| } | | |

# FIG. 13A

# FIG. 13B

# FIG. 13C

# FIG. 13D

# FIG. 14A

# FIG. 14B

# FIG. 14C

# FIG. 14D

# FIG. 14E

# FIG. 14F